# EUROPEAN PATENT APPLICATION

(11) **EP 4 815 319 A1**
(43) Date of publication of application: **30.09.2026**
(21) Application number: 26168145.6
(22) Date of filing: 26.03.2026
(51) Int. Cl.: H04B 3/00

(54) **POSITIVE/NEGATIVE SKEW CALIBRATION IN CABLE ASSEMBLIES**

(30) Priority: 26.03.2025 US 202563778224 P
(71) Applicant: Marvell Asia Pte Ltd, Singapore 369522 (SG)
(72) Inventor: Ahmad, Fazil, Irvine, CA, 92606 (US); Tan, Han-Yuan, Santa Clara, CA, 95054 (US); Riani, Jamal, 5683RZ Best (NL); Alnabulsi, Basel, Ottawa, ON, K2W0C3 (CA); Wu, Xing, Palo Alto, CA, 94303 (US); Sun, Wensheng, Newark, CA, 94560 (US); Loi, Chang-Feng, 576628 Singapore (SG); Gurumoorthy, Vivekananth, Fremont, CA, 94538 (US); Abidin, Cindra, Irvine, CA, 92604 (US)
(74) Representative: Grünecker Patent- und Rechtsanwälte PartG mbB

(57) **Abstract**

A cable assembly includes first and second active elements interconnected via a cable, wherein the first active element comprises circuitry configured to transmit to the second active element an original differential signal comprising a positive- (P-) side and a corresponding negative- (N-) side and determine a P/N skew in a corresponding reflected signal comprising a portion of the original differential signal reflected back from the second active element to the first active element, the first active element further comprising circuitry configured to compensate for the determined P/N skew during transmission of a subsequent differential signal.

## Description

### Priority Application

This patent application claims priority to and/or the benefit of U.S. Provisional Application No. 63/778,224 entitled, "P/N Skew Calivration in Active Electrical Cables," filed on March 26, 2025, which is hereby incorporated by reference in its entirety.

### Background

Generative artificial intelligence (Al) has put enormous demand on data infrastructure. Given the ever-increasing demand for bandwidth to satisfy requirements of artificial intelligence (Al) systems, 100 gigabit (Gb)/lane connectivity is transitioning to 200Gb/lane connectivity to enable 1.6 terabit per second (16T) Ethernet. Enabling robust operation at this data transmission rate necessitates resolution of numerous technical challenges, such as component bandwidth and signal integrity improvements in cables, connectors, and packages. Traditionally, data center servers and networking equipment have relied on copper cables called direct attach cables for making connections within and between racks. Such copper cables fail to meet signal integrity requirements at high speeds (e.g., 224Gbps+). As a result, data centers are transitioning from direct attach cables to other types of cables/cable assemblies, including but not limited to active electrical cable (AEC) assemblies. AEC assemblies typically include two active elements comprising retimers (one on each end) to improve signal integrity by equalizing the cable loss; however, at high speeds, delay mismatch between positive (P) signal transmission and negative (N) signal transmission still poses a signal integrity challenge. Accordingly, a mechanism for sensing and correcting PIN delay mismatch, or skew, is needed.

### Brief Description of the Drawings

Embodiments will be readily understood by the following detailed description in conjunction with the accompanying drawings. To facilitate this description, like reference numerals designate like structural elements. Embodiments are illustrated by way of example, and not by way of limitation, in the figures of the accompanying drawings.
FIG. 1 illustrates a variety of cable assemblies, according to some emboidments of the disclosure.
FIG. 2A illustrates an example AEC assembly, according to some embodiments of the disclosure.
FIG. 2B illustrates a schematic diagram of the AEC assembly of FIG. 2A, according to some embodiments of the disclosure.
FIGs. 3A and 3B illustrate more detailed schematic diagrams of the AEC assembly of FIG. 2A, according to some embodiments of the disclosure.
FIGs. 4 and 5 illustrate schematic diagrams of the AEC assembly of FIG. 2A showing a correlation path and correlation engine, according to some embodiments of the disclosure.
FIG. 6 illustrates an example AEC assembly according to some alternative embodiments of the disclosure.
FIG. 7 illustrates a flowchart of example operations performed in connection with an AEC assembly, according to some embodiments of the disclosure.
FIG. 8 illustrates a flowchart of example operations performed in connection with an AEC assembly, according to some alternative embodiments of the disclosure.

### Detailed Description

### Overview

In accordance with features of embodiments described herein, an innovative solution for providing P/N skew detection and calibration in an AEC is provided. In particular embodiments, a random signal is transmitted from a first retimer of the AEC, portion of which signal is reflected back to the first retimer by a second retimer of the AEC. At the first retimer, correlation delay on the P- and N-sides of the reflected signal are measured separately and from the differential delay mismatch, or skew, is determined. In some embodiments, a correction function for the delay mismatch may be applied at the transmit circuit of the first retimer by modifying the transmit circuit to apply the skew in the transmitter for correction. In an alternative embodiment, a sensor is provided at the receive circuit of the second retimer for sensing signal information and providing the information to the transmit circuit of the first retimer, which signal information may be used to correct for delay mismatch at the transmit circuit.

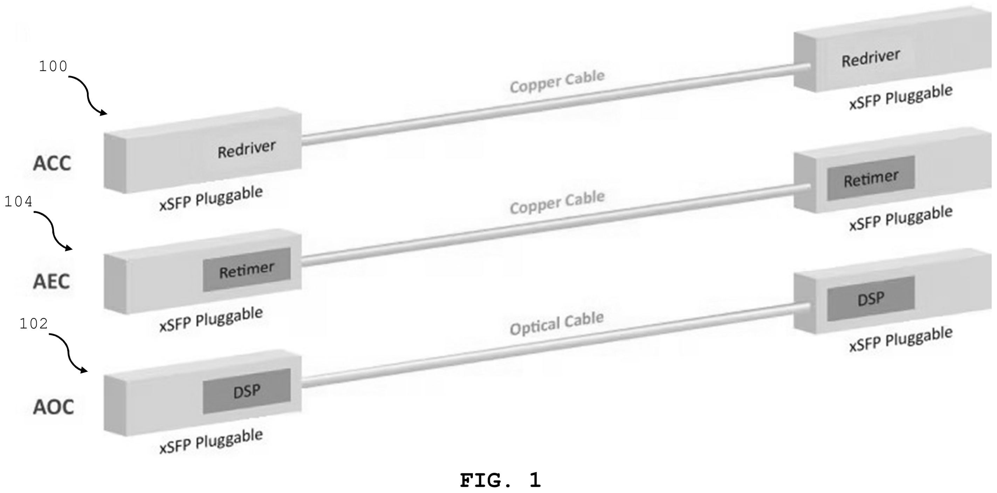

Referring briefly to FIG. 1, it will be recognized that techniques described herein may be advantageously applicable to a variety of cable technologies, including but not limited to co-packaged copper, active copper cable (ACC) 100, and active optical cable (AOC) 102, as well as AEC 104 as described herein, without departing from the spirit or scope of the emboidments described herein and that AEC embodiments described herein are intended to be exemplary only and not limiting with regard to application of the techniques.

AOCs, such as AOC 102, include Digital Signal Processors (DSPs) as active elements at both ends of an optical cable and convert the electrical signal to a light signal. The optical fiber used is flexible and significantly lighter in comparison to a passive copper cable. AOCs are well suited for long reach applications. ACCs, such as ACC 100, are copper cables with redrivers as active elements at both ends as the active component. The redrivers perform signal amplification and equalization. ACCs, although less flexible than AOCs, are a more cost-effective and lower-power alternative. As previously noted, retimers comprise the active elements of AECs.

### Exemplary AEC assembly

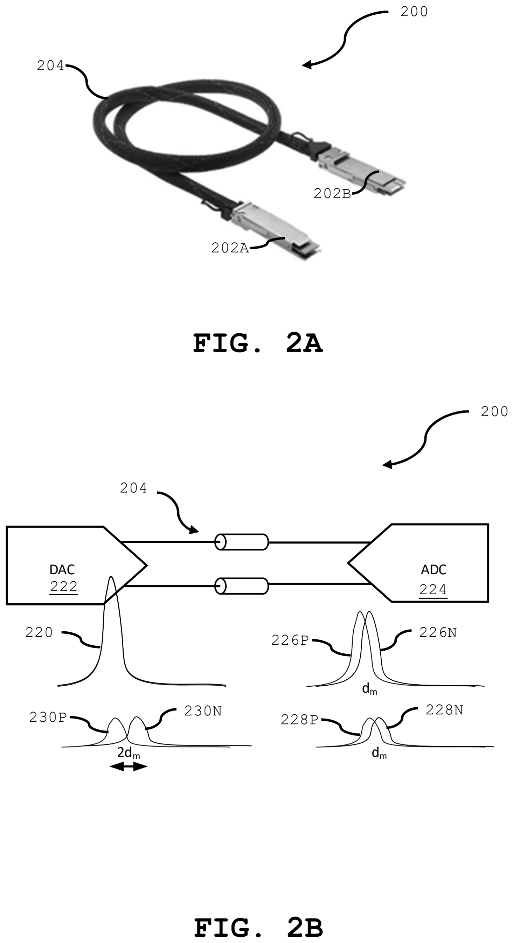

FIG. 2A illustrates an exemplary AEC assembly (or simply AEC) 200. As shown in FIG. 2A, AEC assembly 200 includes first and second retimer modules 202A, 202B, integrated with opposite ends of a length of coaxial cable 204. In accordance with particular embodiments, coaxial cable 204 comprises thin coaxial copper to extend high-speed (i.e., 56G/112G+ per lane) signals 0.5m to 0.7m+, overcoming the distance limitations of passive cables in 400G/800G/1.6T data centers. AECs utilize digital signal processing (DSP)-based retimer technology to clean, amplify, and re-time signals, significantly reducing bit error rates (BERs) while providing a thinner, more flexible, and lower-latency alternative to optical fiber. DSP retimers (such as retimers 202A, 202B) and FEC in the connectors minimize jitter, crosstalk, and signal distortion and use of high-frequency coaxial conductors (often 30AWG or thinner) improve signal integrity. As a result, AECs, such as AEC assembly 200, are ideal for high-density Al clusters, top-of-rack (ToR) switching, and PCIe Gen5/CXL interconnections.

AECs are thinner and provide longer reach than direct attach cables, which are limited to shorter distances (~2m), and offer lower cost and power while providing comparable reach than active optical cables. Active copper cables use retimers to amplify signals, whereas AECs use retimers for superior signal regeneration.

Characteristics of AEC assembly 200 with respect to P/N skew will be illustrated with reference to FIG. 2B. As shown in FIG. 2B, a random differential signal is represented by a waveform 220. It should be noted that waveform 220 actually comprises two waveforms, including a P-side waveform and an N-side waveform; however, at the point of transmission, the P- and N-side waveforms are substantially aligned and therefore appear in FIG. 2B as a single waveform 220. When the differential signal represented by waveform 220 is transmitted along coaxial cable 204 from a transmit circuit, represented in FIG. 2B by a digital-to-analog converter (DAC) 222, of one of the retimer modules 202A, 202B, to a receive circuit, represented in FIG. 2B by an analog-to-digital converter (ADC) 224, of the other one of the retimer modules, the signal will experience an P/N skew, whereby either the P-side or the N-side of the signal will arrive at the receive side later than the other. Waveforms 226P, 226N, represent the differential signal as received at the receive side ADC 224; it will be noted that at the receive side, there is a delay mismatch dₘ between waveforms 226P, 226N, inherent to length and other characteristics of cable 204. Due to impedance mismatch at the receive side, a portion of the signal may be reflected back from the ADC 224, as represented by waveforms 228P, 228N (also with delay mismatch dₘ). When received back at the DAC 222 of the transmit circuit, the reflected signal will have experienced a delay mismatch of 2dₘ, due to additional skew introduced by traversal of the signal along the cable back to the transmit circuit, as represented by waveforms 230P, 230N.

In accordance with features of embodiments described herein, and as will be described in greater detail hereinbelow, a correction function for the delay mismatch may be introduced at the transmit circuit. Additionally, the transmit circuit may be modified to apply the skew in the transmit circuit for correction purposes.

### Exemplary circuitry for P/N skew calibration in AEC

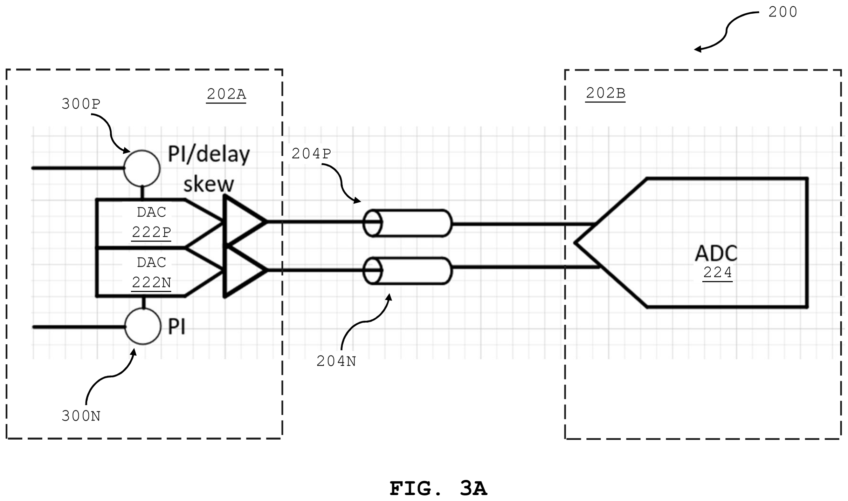

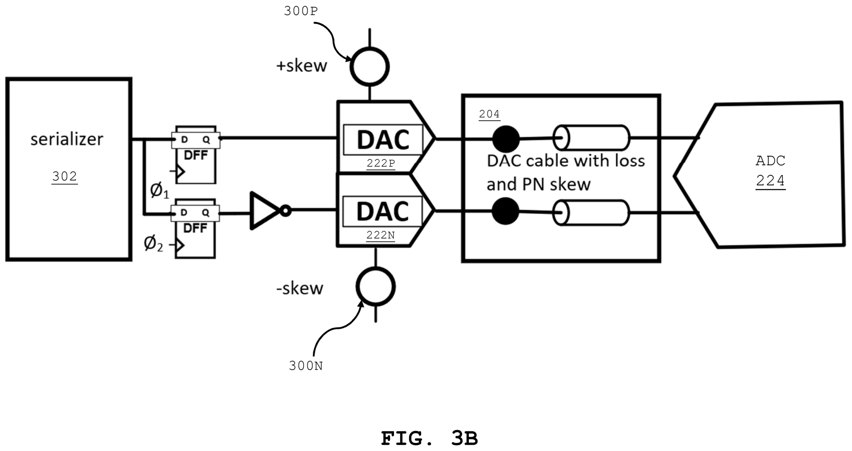

Referring now to FIG. 3A, a pseudo differential transmitter may be used to add delay mismatch and to compensate for cable delay delivery. As shown in FIG. 3A, two phase interpolators 300P, 300N, are provided for controlling, respectively, the P-side of the transmission phase and the N-side of the transmission phase. Phase delay (or time delay) in the two phase interpolators (Pls) 300P, 300N, will compensate for cable delay mismatch. In particular embodiments, PIs 300P, 300N, may be rotated such that the signal reaching the receive circuit 224 is close to differential. Rotation of a PI refers to dynamically adjusting the phase shift of an output clock signal, allowing it to move smoothly through 360 degrees or more relative to a reference signal. In high-speed serial communications and clock and data recovery (CDR) systems, such rotation may be used to fine tune the sampling point of incoming data, effectively shifting the sampling clock in time to maintain optimal alignment (i.e., in the center of the data eye). Rotation is not a static 90 degree shift; rather, rotating implies that the control logic can send codes to the PI to increment or decrement the output phase in small shifts. The PI often takes two quadrature reference clocks (0 degrees and 90 degrees, or I/Q) and mixes them with varying weights (current or voltage) to create an output phase somewhere between the reference clocks. Rotating means changing the weights to move from 0 degrees to 90 degrees, then 90 degrees to 180 degrees, and so on. Many PI-based systems are designed for infinite rotation, meaning they can rotate continuously in one direction (clockwise or counterclockwise) by wrapping around from 360 degrees back to 0 degrees without losing lock.

It will be noted that although PIs are shown as the means for controlling signal phase/time delay, other devices, such as sensors, and/or techniques may be employed without departing from the spirit or scope of embodiments described herein.

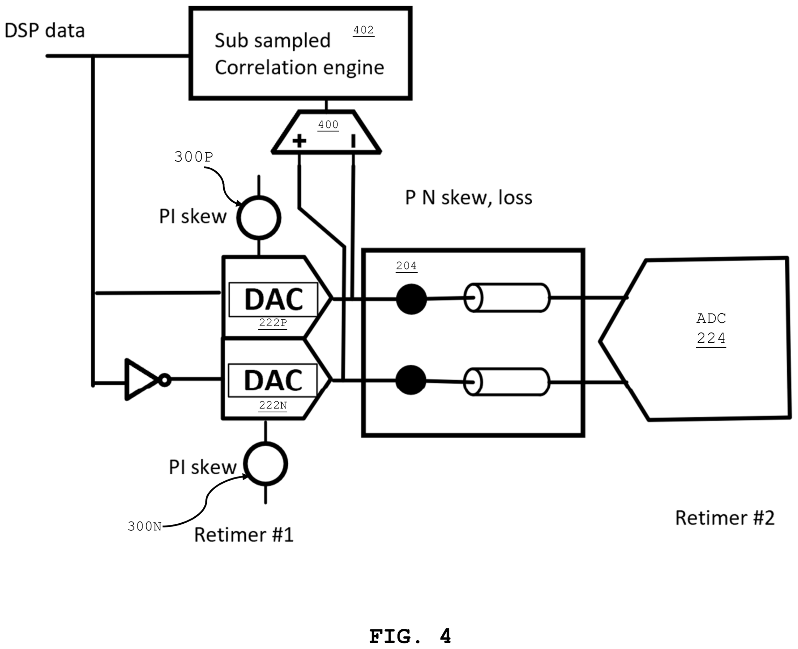

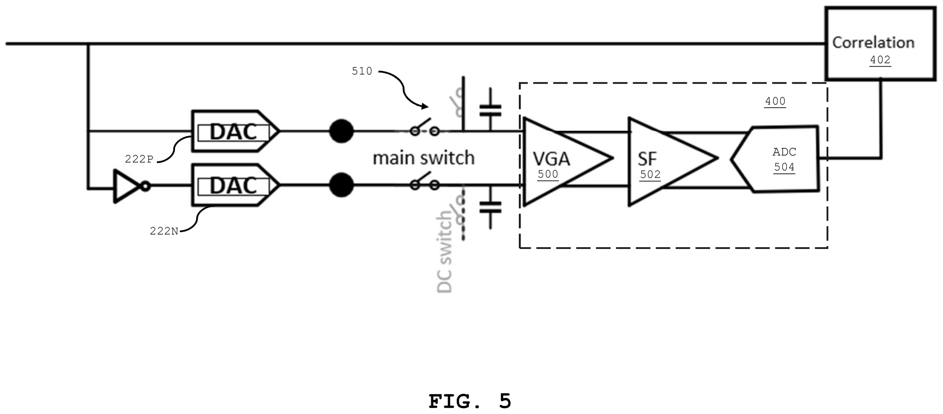

Referring now to FIGs. 4 and 5, in accordance with features of embodiments described herein, a correlation path may be provided at the transmit end for performing delay estimation in connection with the reflected signal. As shown in FIG. 4, correlation path may include signal processing circuitry 400 for processing the P-side and N-side of the reflected signal and for providing the processed P-side and N-side signals to a correlation engine 402 for performing delay estimation. As shown in FIG. 5, signal processing circuitry 400 may include a gain stage 500, which in particular embodiments may be implemented using a variable gain amplifier (VGA) 500, a source follower (SF) 502 for buffering the signal, and an ADC 504 for digitizing the signal and providing the digitized signal to correlation engine 402. VGA 500 ensures sufficient swing at the input of ADC 504, which input may be driven by SF 502.

Delay estimation may be performed using matched filter, least mean squared (LMS) response, or any other DSP technique. In particular embodiments, correlation is performed for each side (P and N) individually. Subsampling may be used to reduce the power of the ADC. Typically, subsampling ratio is 500 or more, hence a low sampling frequency ADC 504 is sufficient for the applications described herein.

In subsampled correlation engine 402, data is first digitized using subsampled ADC 504 and correlated with the original transmitted data. This will measure the delay of the return transmission. Since the skew is between the P-side and the N-side, two single-ended measurements are needed. To enable single-ended measurements, a switching assembly 510 is provided for enabling both differential sampling (by connecting to a main path) and/or single-ended sampling (by connecting to correlation path). During single-ended sampling, one input of VGA 500 may be connected to common mode voltage using a DC switch and the other input may be connected to the signal being sampled (e.g., P-side or N-side). The ADC output is correlated to the original transmitted signal using matched filter, LMS, or any other DSP technique.

In particular embodiments, delay estimation/calibration may be performed during a calibration period prior to initial use of AEC assembly 200 to transmit data between servers. In alternative embodiments, delay estimation/correlation may be performed at various times throughout deployment of AEC assembly 200.

### Exemplary alternative circuitry for P/N skew calibration in AEC

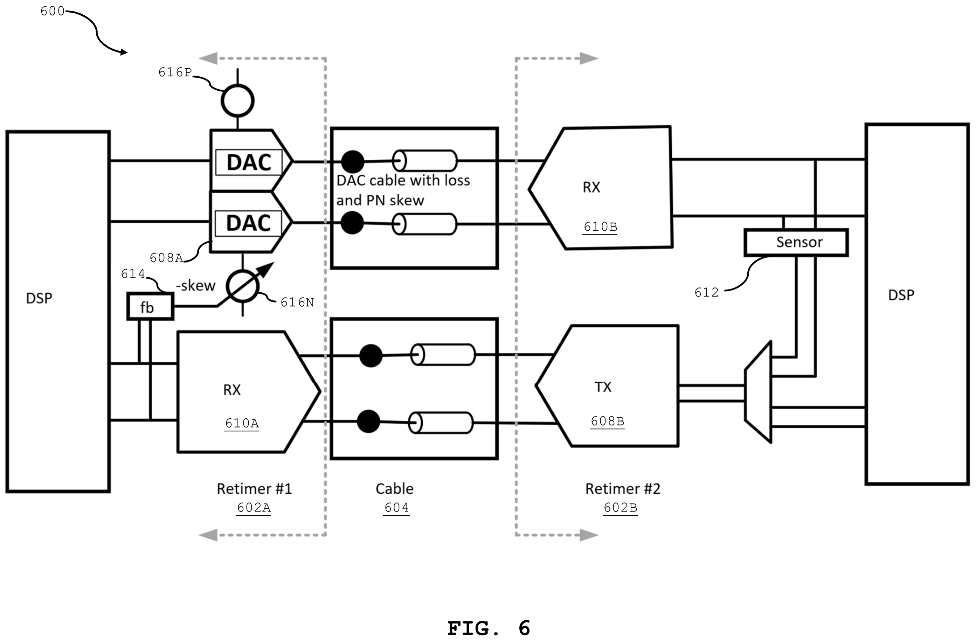

An alternative embodiment of P/N skew calibration in AEC is illustrated in FIG. 6 with reference to an AEC assembly 600. As shown in FIG. 6, AEC assembly 600 includes first and second retimer 602A, 602B, integrated with a length of coaxial cable 604. Each retimer 602A, 602A, includes a transmit circuit 608A, 608B, and a receive circuit 610A, 610B. During delay estimation of assembly 600, P/N skew information regarding a signal transmitted from transmit circuit 608A to receive circuit 610B is detected by a sensor 612 and transmitted by transmit circuit 608B to receive circuit 610A via a backchannel of cable 604. Sensor information is used by feedback circuitry 614 to control delay skew of PIs 616P, 616N, in a manner similar to embodiments described above. In particular embodiments, sensor information may comprise various aspects of received signal quality, including but not limited to transmitter and dispersion eye closure quaternary (TDECQ), magnitude squared coherence (MSC), signal-to-noise and distortion ratio (SNDR), and/or BER. This process may be repeated with the delay skew of the PIs being updated until the sensor information indicates that the signal quality is acceptable, at which point the assembly 600 is calibrated.

Embodiments described herein address both error sensing and correction, with error sensing being performed using reflected signal power and correction being performed using PI or sensors, for example. It will be recognized that, although embodiments described herein perform calibration in the transmit circuitry, it may also be performed in the receive circuitry without departing from the spirit or scope of the present disclosure. Embodiments described herein include transmission of a non-differential signal to compensate for the P/N skew of the cable, such that when it reaches receiver it is perfectly differential, inclusion of circuitry to generate a non-differential signal in the transmit circuity, and adding a delay on either the P- or the N-side of the transmission (or, more precisely, adding a delay in clocking circuits used to trigger the DAC) to compensate for cable delay skew. A P/N skew sense circuit may be included in the transmit circuitry, operating on the concept of measuring distance using reflection. A P/N skew sense circuit may be provided in the receive circuitry, operating on the concept of measuring internal metrics such as TDECQ, MSC, SNDR, and/or BER.

### Exemplary techniques for P/N skew calibration in AEC

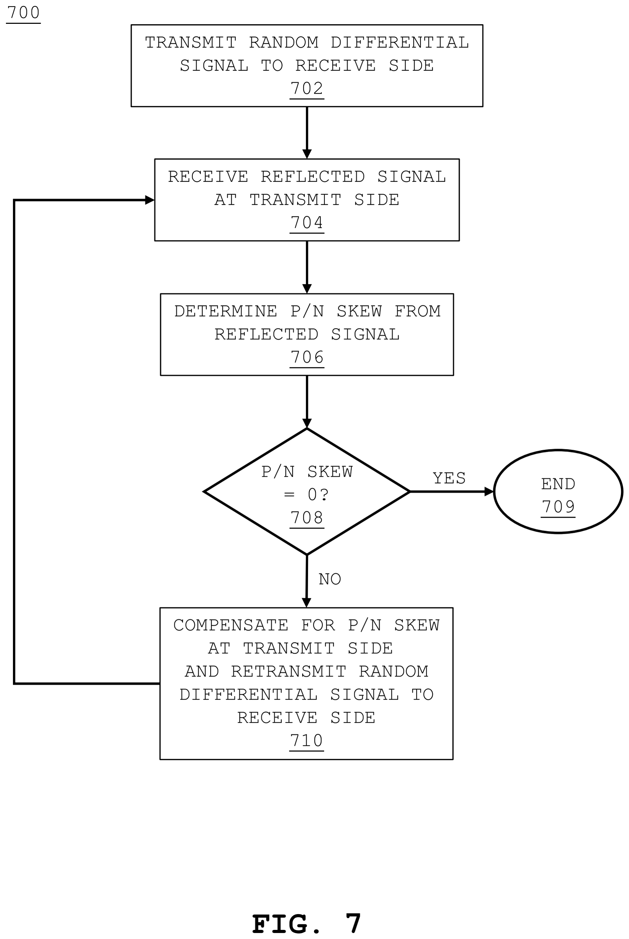

FIG. 7 is a flowchart 700 of example operations performed in connection with P/N skew calibration technique in an AEC assembly, such as AEC assembly 200, according to some embodiments of the disclosure. In certain embodiments, one or more of the operations illustrated in FIG. 7 may be performed by one or more of the elements illustrated in FIGs. 2B-5, for example.

In an operation 702, during an AEC calibration session, a random differential signal is transmitted from a transmit circuit of a first retimer of the AEC to a receive circuit of a second retimer of the AEC. It will be recognized that AEC calibration session may occur prior to initial deployment of AEC assembly in a data center or at one or times during deployment of AEC assembly in a data center as may be necessitated by various applications.

In an operation 704, a reflected signal corresponding to the transmitted signal is received at the transmit circuit of the first retimer.

In an operation 706, a P/N skew of the reflected signal is determined (e.g., by a correlation engine) at the transmit circuit of the first retimer.

In an operation 708, a determination is made whether the P/N skew is zero. If so, execution terminates at an operation 709 with the P/N skew of the AEC being fully compensated for; otherwise, execution proceeds to an operation 710.

In operation 710, the P/N skew determined in operation 706 is compensated for at the transmit circuit of the first retimer and a random differential signal is transmitted to the receive circuit of the second retimer.

Upon completion of operation 710, execution returns to operation 704.

Although the operations shown in and described with reference to FIG. 7 are illustrated as occurring once each and in a particular order, it will be recognized that the operations may be performed in any suitable order and repeated as desired. Additionally, one or more operations may be performed in parallel. Furthermore, the operations illustrated in FIG. 7 may be combined or may include more or fewer details than described.

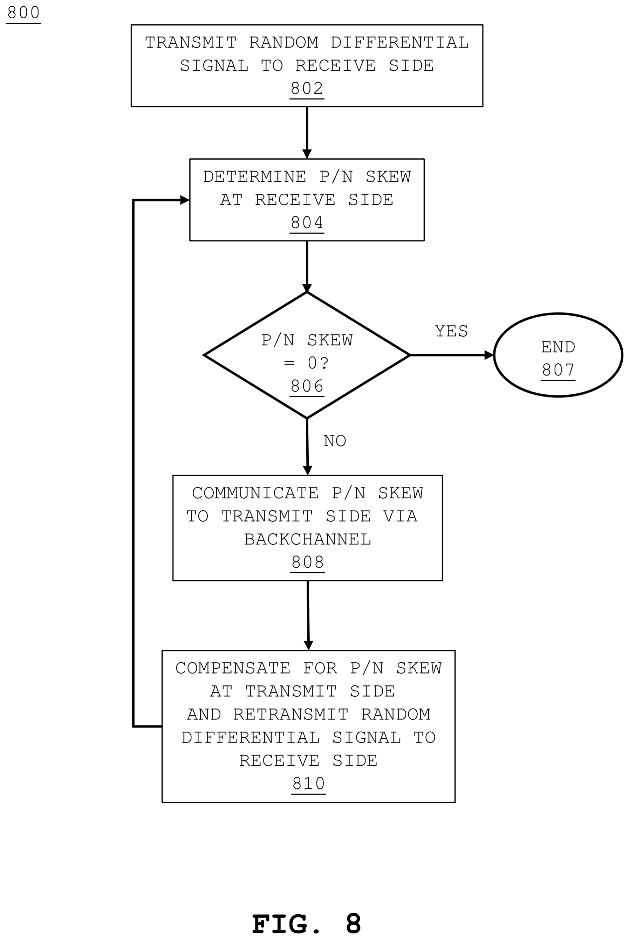

FIG. 8 is a flowchart 800 of example operations performed in connection with an alternative P/N skew calibration technique in an AEC assembly, such as AEC assembly 600, according to some embodiments of the disclosure. In certain embodiments, one or more of the operations illustrated in FIG. 8 may be performed by one or more of the elements illustrated in FIG. 6, for example.

In an operation 802, during an AEC calibration session, a random differential signal is transmitted from a transmit circuit of a first retimer of the AEC to a receive circuit of a second retimer of the AEC. It will be recognized that AEC calibration session may occur prior to initial deployment of AEC assembly in a data center or at one or times during deployment of AEC assembly in a data center as may be necessitated by various applications.

In an operation 804, a P/N skew of the transmitted signal is determined at the receive circuit of the second retimer.

In an operation 806, a determination is made whether the P/N skew is zero. If so, execution terminates at an operation 807 with the P/N skew of the AEC being fully compensated; otherwise, execution proceeds to an operation 808.

In operation 808, the P/N skew determined in operation 804 is transmitted to a receive circuit of the first retimer from a transmit circuit of the second retimer via a backchannel.

In operation 810, the P/N skew determined in operation 804 is compensated for at the transmit circuit of the first retimer and a random differential signal is transmitted to the receive circuit of the second retimer.

Upon completion of operation 810, execution returns to operation 804.

Although the operations shown in and described with reference to FIG. 8 are illustrated as occurring once each and in a particular order, it will be recognized that the operations may be performed in any suitable order and repeated as desired. Additionally, one or more operations may be performed in parallel. Furthermore, the operations illustrated in FIG. 8 may be combined or may include more or fewer details than described.

### Select examples

Example 1 provides a cable assembly including first and second active elements interconnected via a cable, in which the first active element includes circuitry configured to transmit to the second active element an original differential signal including a positive- (P-) side and a corresponding negative- (N-) side and determine a P/N skew in a corresponding reflected signal including a portion of the original differential signal reflected back from the second active element to the first active element, the first active element further including circuitry configured to compensate for the determined P/N skew during transmission of a subsequent differential signal.

Example 2 provides the cable assembly of example 1, in which the circuitry configured to compensate for the determined P/N skew includes at least one phase interpolator for injecting a transmission delay in connection with one of P- and N-sides.

Example 3 provides the cable assembly of example 2, in which the at least one phase interpolator includes a first phase interpolator for controlling timing of transmission of the P-side and a second phase interpolator for controlling timing of transmission of the N-side.

Example 4 provides the cable assembly of any of examples 1-3, in which the first and second active elements include retimers or redrivers and the cable includes a copper cable.

Example 5 provides the cable assembly of any of examples 1-4, in which the first and second active elements include digital signal processors (DSPs) and the cable includes an optical cable.

Example 6 provides the cable assembly of any of examples 1-5, in which the first active element further includes a switching assembly for enabling a correlation path of the first active element and in which the correlation path includes a correlation engine for correlating the reflected signal to the original differential signal to determine the P/N skew.

Example 7 provides the cable assembly of example 6, in which the correlation path further includes circuitry for processing the reflected signal to be input to the correlation engine andwherein a P-side of the reflected signal is processed independently of an N-side of the reflected signal.

Example 8 provides the cable assembly of example 7, in which the circuitry for processing the reflected signal further includes a variable gain amplifier (VGA) for amplifying the reflected signal, a source follower connected to an output of the VGA for buffering the amplified reflected signal, and an analog-to-digital converter (ADC) for sampling the amplified reflected signal.

Example 9 provides a method for compensating for P/N skew in an active cable assembly including first and second active elements interconnected via a cable, the method including transmitting from the first active element to the second active element an original differential signal including a positive- (P-) side and a corresponding negative- (N-) side; detecting at the first active element a P/N skew in a corresponding reflected signal received at the first active element, the reflected signal including a portion of the original differential signal reflected back from the second active element to the first active element; and compensating for the detected P/N skew during transmission of a subsequent differential signal from the first active element to the second active element.

Example 10 provides the method of example 9, further including detecting at the first active element an updated P/N skew in a subsequent reflected signal received at the first active element, the subsequent reflected signal including a portion of the subsequent differential signal reflected back from the second active element to the first active element; and determining whether the updated P/N skew is equal zero.

Example 11 provides the method of example 10, further including, if the updated P/N skew is not equal to zero, compensating, detecting, and determining steps until the updated P/N skew is determined to be equal to zero.

Example 12 provides the method of any of examples 9-11, in which the compensating is performed by at least one phase interpolator for injecting a transmission delay in connection with one of P- and N-sides.

Example 13 provides the method of example 12, in which the at least one phase interpolator includes a first phase interpolator for controlling timing of transmission of the P-side and a second phase interpolator for controlling timing of transmission of the N-side.

Example 14 provides the method of any of examples 9-13, further including enabling a correlation path of the first active element.

Example 15 provides the method of example 14, further including correlating the reflected signal to the original differential signal to determine the P/N skew using a correlation engine.

Example 16 provides the method of example 15, further including, prior to the correlating, pre-processing the reflected signal, the pre-processing including amplifying the reflected signal, buffering the amplified reflected signal, and sampling the amplified reflected signal.

Example 17 provides the method of example 16, in which a P-side of the reflected signal is pre-processed and correlated independently of an N-side of the reflected signal.

Example 18 provides an active cable assembly including first and second active elements interconnected via a cable, in which the first active element includes circuitry configured to transmit to the second active element a differential signal including a positive- (P-) side and a corresponding negative- (N-) side and the second active element includes circuitry configured to sense at least one characteristic of the differential signal indicative of a delay mismatch between the P-side and the N-side, the second active element further including circuitry configured to communicate the at least one characteristic to the first active element, the first active element further including circuitry configured to compensate for the delay mismatch during transmission of a subsequent differential signal.

Example 19 provides the active cable assembly of example 18, in which the at least one characteristic is communicated from the second active element to the first active element via a backchannel of the cable.

Example 20 provides the active cable assembly of any of examples 18-19, in which the circuitry configured to compensate for the delay mismatch includes at least one phase interpolator for injecting a transmission delay in connection with one of P- and N-sides.

### Variations and other notes

The detailed description, such as the "Select examples" section, provide various examples of the embodiments disclosed herein.

As used herein, the term "coupled to" or "coupled with" refers to a relationship between electronic components or circuit elements wherein the components are in electronic communication with one another and capable of transmitting and/or receiving electrical signals between them. The term "coupled to" does not require a direct physical or electrical connection between the coupled components. Rather, "coupled to" can encompass arrangements where the components are connected through one or more intervening elements, components, circuits, or transmission paths. For example, a first component may be "coupled to" a second component through intermediate components such as resistors, capacitors, inductors, transistors, logic gates, buses, transformers, or other electronic components, or through intermediate transmission paths, while still maintaining the capability for electronic communication between the first and second components.

The above description of illustrated implementations of the disclosure, including what is described in the Abstract, is not intended to be exhaustive or to limit the disclosure to the precise forms disclosed. While specific implementations of, and examples for, the disclosure are described herein for illustrative purposes, various equivalent modifications are possible within the scope of the disclosure, as those skilled in the relevant art will recognize. These modifications may be made to the disclosure in light of the above detailed description.

For purposes of explanation, specific numbers, materials, and configurations are set forth in order to provide a thorough understanding of the illustrative implementations. However, it will be apparent to one skilled in the art that the present disclosure may be practiced without the specific details and/or that the present disclosure may be practiced with only some of the described aspects. In other instances, well known features are omitted or simplified in order not to obscure the illustrative implementations.

Further, references are made to the accompanying drawings that form a part hereof, and in which are shown, by way of illustration, embodiments that may be practiced. It is to be understood that other embodiments may be utilized, and structural or logical changes may be made without departing from the scope of the present disclosure. Therefore, the following detailed description is not to be taken in a limiting sense.

Various operations may be described as multiple discrete actions or operations in turn, in a manner that is most helpful in understanding the disclosed subject matter. However, the order of description should not be construed as to imply that these operations are necessarily order dependent. In particular, these operations may not be performed in the order of presentation. Operations described may be performed in a different order from the described embodiment. Various additional operations may be performed or described operations may be omitted in additional embodiments.

For the purposes of the present disclosure, the phrase "A or B" or the phrase "A and/or B" means (A), (B), or (A and B). For the purposes of the present disclosure, the phrase "A, B, or C" or the phrase "A, B, and/or C" means (A), (B), (C), (A and B), (A and C), (B and C), or (A, B, and C). The term "between," when used with reference to measurement ranges, is inclusive of the ends of the measurement ranges.

The description uses the phrases "in an embodiment" or "in embodiments," which may each refer to one or more of the same or different embodiments. The terms "comprising," "including," "having," and the like, as used with respect to embodiments of the present disclosure, are synonymous. The disclosure may use perspective-based descriptions such as "above," "below," "top," "bottom," and "side" to explain various features of the drawings, but these terms are simply for ease of discussion, and do not imply a desired or required orientation. The accompanying drawings are not necessarily drawn to scale. Unless otherwise specified, the use of the ordinal adjectives "first," "second," and "third," etc., to describe a common object, merely indicates that different instances of like objects are being referred to and are not intended to imply that the objects so described must be in a given sequence, either temporally, spatially, in ranking or in any other manner.

In the following detailed description, various aspects of the illustrative implementations will be described using terms commonly employed by those skilled in the art to convey the substance of their work to others skilled in the art.

The terms "substantially," "close," "approximately," "near," and "about," generally refer to being within +/- 20% of a target value as described herein or as known in the art. Similarly, terms indicating orientation of various elements, e.g., "coplanar," "perpendicular," "orthogonal," "parallel," or any other angle between the elements, generally refer to being within +/- 5-20% of a target value as described herein or as known in the art.

In addition, the terms "comprise," "comprising," "include," "including," "have," "having" or any other variation thereof, are intended to cover a non-exclusive inclusion. For example, a method, process, or device, that comprises a list of elements is not necessarily limited to only those elements but may include other elements not expressly listed or inherent to such method, process, or device. Also, the term "or" refers to an inclusive "or" and not to an exclusive "or."

The systems, methods, and devices of this disclosure each have several innovative aspects, no single one of which is solely responsible for all desirable attributes disclosed herein. Details of one or more implementations of the subject matter described in this specification are set forth in the description and the accompanying drawings.
The following is a list of further preferred embodiments of the invention:
1. A cable assembly comprising first and second active elements interconnected via a cable, wherein the first active element comprises circuitry configured to transmit to the second active element an original differential signal comprising a positive- (P-) side and a corresponding negative- (N-) side and determine a P/N skew in a corresponding reflected signal comprising a portion of the original differential signal reflected back from the second active element to the first active element, the first active element further comprising circuitry configured to compensate for the determined P/N skew during transmission of a subsequent differential signal.
2. The cable assembly of embodiment 1, wherein the circuitry configured to compensate for the determined P/N skew comprises at least one phase interpolator for injecting a transmission delay in connection with one of P- and N-sides.
3. The cable assembly of embodiment 2, wherein the at least one phase interpolator comprises a first phase interpolator for controlling timing of transmission of the P-side and a second phase interpolator for controlling timing of transmission of the N-side.
4. The cable assembly of embodiment 1, wherein the first and second active elements comprise retimers or redrivers and the cable comprises a copper cable.
5. The cable assembly of embodiment 1, wherein the first and second active elements comprise digital signal processors (DSPs) and the cable comprises an optical cable.
6. The cable assembly of embodiment 1, wherein the first active element further comprises a switching assembly for enabling a correlation path of the first active element and wherein the correlation path comprises a correlation engine for correlating the reflected signal to the original differential signal to determine the P/N skew.
7. The cable assembly of embodiment 6, wherein the correlation path further comprises circuitry for processing the reflected signal to be input to the correlation engine andwherein a P-side of the reflected signal is processed independently of an N-side of the reflected signal.
8. The cable assembly of embodiment 7, wherein the circuitry for processing the reflected signal further comprises a variable gain amplifier (VGA) for amplifying the reflected signal, a source follower connected to an output of the VGA for buffering the amplified reflected signal, and an analog-to-digital converter (ADC) for sampling the amplified reflected signal.
9. A method for compensating for P/N skew in an active cable assembly comprising first and second active elements interconnected via a cable, the method comprising:
   transmitting from the first active element to the second active element an original differential signal comprising a positive- (P-) side and a corresponding negative- (N-) side;
   detecting at the first active element a P/N skew in a corresponding reflected signal received at the first active element, the reflected signal comprising a portion of the original differential signal reflected back from the second active element to the first active element; and
   compensating for the detected P/N skew during transmission of a subsequent differential signal from the first active element to the second active element.
10. The method of embodiment 9, further comprising:
   detecting at the first active element an updated P/N skew in a subsequent reflected signal received at the first active element, the subsequent reflected signal comprising a portion of the subsequent differential signal reflected back from the second active element to the first active element; and
   determining whether the updated P/N skew is equal zero.
11. The method of embodiment 10, further comprising, if the updated P/N skew is not equal to zero, compensating, detecting, and determining steps until the updated P/N skew is determined to be equal to zero.
12. The method of embodiment 9, wherein the compensating is performed by at least one phase interpolator for injecting a transmission delay in connection with one of P- and N-sides.
13. The method of embodiment 12, wherein the at least one phase interpolator comprises a first phase interpolator for controlling timing of transmission of the P-side and a second phase interpolator for controlling timing of transmission of the N-side.
14. The method of embodiment 9, further comprising enabling a correlation path of the first active element.
15. The method of embodiment 14, further comprising correlating the reflected signal to the original differential signal to determine the P/N skew using a correlation engine.
16. The method of embodiment 15, further comprising, prior to the correlating, pre-processing the reflected signal, the pre-processing comprising amplifying the reflected signal, buffering the amplified reflected signal, and sampling the amplified reflected signal.
17. The method of embodiment 16, wherein a P-side of the reflected signal is pre-processed and correlated independently of an N-side of the reflected signal.
18. An active cable assembly comprising first and second active elements interconnected via a cable, wherein the first active element comprises circuitry configured to transmit to the second active element a differential signal comprising a positive- (P-) side and a corresponding negative- (N-) side and the second active element comprises circuitry configured to sense at least one characteristic of the differential signal indicative of a delay mismatch between the P-side and the N-side, the second active element further comprising circuitry configured to communicate the at least one characteristic to the first active element, the first active element further comprising circuitry configured to compensate for the delay mismatch during transmission of a subsequent differential signal.
19. The active cable assembly of embodiment 18, wherein the at least one characteristic is communicated from the second active element to the first active element via a backchannel of the cable.
20. The active cable assembly of embodiment 18, wherein the circuitry configured to compensate for the delay mismatch comprises at least one phase interpolator for injecting a transmission delay in connection with one of P- and N-sides.

## Claims

1. A cable assembly comprising first and second active elements interconnected via a cable, wherein the first active element comprises circuitry configured to transmit to the second active element an original differential signal comprising a positive- (P-) side and a corresponding negative- (N-) side and determine a P/N skew in a corresponding reflected signal comprising a portion of the original differential signal reflected back from the second active element to the first active element, the first active element further comprising circuitry configured to compensate for the determined P/N skew during transmission of a subsequent differential signal.

2. The cable assembly of claim 1, wherein the circuitry configured to compensate for the determined P/N skew comprises at least one phase interpolator for injecting a transmission delay in connection with one of P- and N-sides.

3. The cable assembly of claim 2, wherein the at least one phase interpolator comprises a first phase interpolator for controlling timing of transmission of the P-side and a second phase interpolator for controlling timing of transmission of the N-side.

4. The cable assembly of one of claims 1 to 3, wherein the first and second active elements comprise retimers or redrivers and the cable comprises a copper cable.

5. The cable assembly of one of claims 1 to 4, wherein the first and second active elements comprise digital signal processors (DSPs) and the cable comprises an optical cable.

6. The cable assembly of one of claims 1 to 5, wherein the first active element further comprises a switching assembly for enabling a correlation path of the first active element and wherein the correlation path comprises a correlation engine for correlating the reflected signal to the original differential signal to determine the P/N skew.

7. The cable assembly of claim 6, wherein the correlation path further comprises circuitry for processing the reflected signal to be input to the correlation engine and wherein a P-side of the reflected signal is processed independently of an N-side of the reflected signal, and/or
wherein the circuitry for processing the reflected signal further comprises a variable gain amplifier (VGA) for amplifying the reflected signal, a source follower connected to an output of the VGA for buffering the amplified reflected signal, and an analog-to-digital converter (ADC) for sampling the amplified reflected signal.

8. A method for compensating for P/N skew in an active cable assembly comprising first and second active elements interconnected via a cable, the method comprising:
transmitting from the first active element to the second active element an original differential signal comprising a positive- (P-) side and a corresponding negative- (N-) side;
detecting at the first active element a P/N skew in a corresponding reflected signal received at the first active element, the reflected signal comprising a portion of the original differential signal reflected back from the second active element to the first active element; and
compensating for the detected P/N skew during transmission of a subsequent differential signal from the first active element to the second active element.

9. The method of claim 8, further comprising:
detecting at the first active element an updated P/N skew in a subsequent reflected signal received at the first active element, the subsequent reflected signal comprising a portion of the subsequent differential signal reflected back from the second active element to the first active element; and
determining whether the updated P/N skew is equal zero.

10. The method of claim 9, further comprising, if the updated P/N skew is not equal to zero, compensating, detecting, and determining steps until the updated P/N skew is determined to be equal to zero.

11. The method of one of claims 8 - 10, wherein the compensating is performed by at least one phase interpolator for injecting a transmission delay in connection with one of P- and N-sides, and/or
wherein the at least one phase interpolator comprises a first phase interpolator for controlling timing of transmission of the P-side and a second phase interpolator for controlling timing of transmission of the N-side.

12. The method of one of claims 8 to 11, further comprising enabling a correlation path of the first active element, and/or
further comprising correlating the reflected signal to the original differential signal to determine the P/N skew using a correlation engine, and/or
further comprising, prior to the correlating, pre-processing the reflected signal, the pre-processing comprising amplifying the reflected signal, buffering the amplified reflected signal, and sampling the amplified reflected signal.

13. The method of claim 12, wherein a P-side of the reflected signal is pre-processed and correlated independently of an N-side of the reflected signal.

14. An active cable assembly comprising first and second active elements interconnected via a cable, wherein the first active element comprises circuitry configured to transmit to the second active element a differential signal comprising a positive- (P-) side and a corresponding negative- (N-) side and the second active element comprises circuitry configured to sense at least one characteristic of the differential signal indicative of a delay mismatch between the P-side and the N-side, the second active element further comprising circuitry configured to communicate the at least one characteristic to the first active element, the first active element further comprising circuitry configured to compensate for the delay mismatch during transmission of a subsequent differential signal.

15. The active cable assembly of claim 14, wherein the at least one characteristic is communicated from the second active element to the first active element via a backchannel of the cable, or
wherein the circuitry configured to compensate for the delay mismatch comprises at least one phase interpolator for injecting a transmission delay in connection with one of P- and N-sides.
